# EUROPÄISCHE PATENTSCHRIFT

(11) **EP 3 707 878 B1**
(45) Veröffentlichungstag und Bekanntmachung des Hinweises auf die Patenterteilung: **20.09.2023**
(21) Anmeldenummer: 18789764.0
(22) Anmeldetag: 16.10.2018
(51) Int. Cl.: H04L 67/12, G06F 9/455, H04L 9/40, G06F 21/53, G06F 21/60

(54) **IOT-COMPUTERSYSTEM SOWIE ANORDNUNG MIT EINEM SOLCHEN IOT-COMPUTERSYSTEM UND EINEM EXTERNEN SYSTEM**
IOT COMPUTER SYSTEM AND ARRANGEMENT HAVING SUCH AN IOT COMPUTER SYSTEM AND AN EXTERNAL SYSTEM
SYSTÈME INFORMATIQUE DE L'IDO AINSI QU'AGENCEMENT AVEC UN TEL SYSTÈME INFORMATIQUE DE L'IDO ET AVEC UN SYSTÈME EXTERNE

(30) Priorität: 07.11.2017 DE 102017125990; 16.01.2018 DE 102018100879
(43) Veröffentlichungstag der Anmeldung: 16.09.2020
(73) Patentinhaber: Fujitsu Technology Solutions GmbH, 80807 München (DE)
(72) Erfinder: WITTLER, Nils, 80807 München (DE); ATZKERN, Jürgen, 80807 München (DE); BRUDEREK, Timo, 80807 München (DE)
(74) Vertreter: Epping - Hermann - Fischer
(86) Internationale Anmeldenummer: PCT/EP2018/078282
(87) Internationale Veröffentlichungsnummer: WO 2019/091722

(56) Entgegenhaltungen:
- EP-A1- 3 208 991
- US-A1- 2014 006 708
- US-A1- 2016 328 556
- US-B1- 9 485 231

## Beschreibung

Die Erfindung betrifft ein IoT-Edge-Computersystem, sowie eine Anordnung mit einem solchen IoT-Edge-Computersystem und einem externen System bzw. Gerät, mit dem dieses IoT-Computersystem verbunden ist.

Computersysteme finden gerade in der Realisierung von Automatisierungs- und Prozessierungsaufgaben immer stärkere Bedeutung. Mit wachsender Verknüpfung und Anzahl von smarten (End-)Geräten und kompakten Systemen, z.B. Sensoren oder Verarbeitungs- und Steuergeräten, die an das Internet angebunden sind (sogenanntes Internet-of-Things, kurz IoT), wächst auch die Menge an Daten, die von den einzelnen Systemen übertragen, verarbeitet, prozessiert und zwischen den Systemen oder zwischen einem Client-System und einem Host-System ausgetauscht werden müssen. Hierzu bedarf es immer stärkerer Rechenperformance bzw. "Intelligenz".

Neben Datenzentren bzw. Cloud-Diensten (Cloud-Servern) als solchen bildet das sogenannte Edge-Computing einen vielversprechenden Ansatz zur Verknüpfung und Anbindung von IoT-Geräten bzw. zur Prozessierung der von diesen generierten Daten. Dabei wird die Rechenperformance bzw. "Intelligenz" vom entfernten Datenzentrum bzw. Cloud-Dienst hin in die unmittelbare Nähe ("at the edge") der IoT-Geräte, d.h. an oder in die Nähe von deren Einsatzort, verbracht, um direkt "vor Ort" die Daten zu erfassen, zu verarbeiten, auszuwerten, etc. Dadurch kann eine große Menge an Daten direkt am Einsatzort verarbeitet werden. Datenzentren bzw. Cloud-Dienste sind dann lediglich für die Vorhaltung und weitere Prozessierung eines ggf. reduzierten Bruchteils der Daten oder der entsprechend vorprozessierten Informationen notwendig. Vorteile hierbei sind z.B. eine Reduzierung der Datenhaltungskosten bzw. Performancekosten, die für die Nutzung der Infrastruktur eines Datenzentrums oder eines Cloud-Dienstes eines entsprechenden Providers anfallen, sowie eine Reduzierung der notwendigen Bandbreite zur Übertragung von entsprechenden Daten.

Zur Realisierung eines derartigen Edge-Computings ist ein sogenanntes IoT-Computersystem bzw. Edge-Computersystem erforderlich. Dabei handelt es sich um ein (speziell für diese Zwecke) eingerichtetes und dimensioniertes Computersystem. Eine wichtige Anforderung ist z.B. ein Dauerbetrieb (sogenannter 24/7-Betrieb) oder ein verlässlicher Betrieb auch an exponierten und ggf. extremen Einsatzorten mit herausfordernden Umweltbedingungen (z.B. sehr kalte, nasse, heiße oder staubige Einsatzorte). Dennoch soll ein Edge-Computersystem idealerweise kompakt aufgebaut sein und nur wenig Bau- bzw. Installationsraum benötigen. Ein attraktives Anwendungsgebiet für Edge-Computing ist z.B. die Anwendung in industriellen Anlagen (sogenannte *"*Industrie 4.0"), in denen Unmengen an Sensordaten, Systemdaten, Anlagendaten, Prozessdaten, Steuerdaten und Kommunikationsdaten (um nur einen Ausschnitt zu nennen) anfallen. Hier sind vielerlei Anwendungen denkbar.

Eine Herausforderung bei der Verarbeitung verschiedenster Daten und Informationen in einem Edge-Computersystem besteht darin, dass in dem Edge-Computersystem unter Umständen verschiedenste Informations- und Datentypen zusammenlaufen, die jedoch für völlig verschiedene Benutzergruppen bestimmt, erlaubt und vorgesehen sind. Eine sehr wichtige Rolle spielt hier die Datensicherheit und Datenvertraulichkeit. Bei Einsatz eines Edge-Computersystems an einem bestimmten Einsatzort werden beispielsweise 1) Daten des Computersystems selbst, wie z.B. Telemetriedaten, insbesondere Maschinendaten, Regelgrößen, Messwerte oder Parameter generiert, aber auch 2) Daten, die in Zusammenhang mit der Verwendung des Edge-Computersystems an dessen Einsatzort stehen, z.B. Sensordaten, Steuerdaten, Anlagendaten, personenbezogene Daten oder Kommunikationsdaten.

Die Daten von Typ 1) sind z.B. für den Hersteller bzw. IT-Dienstleister des Edge-Computersystems bzw. der Edge-Computersystemlösung wichtig. Diese Daten können z.B. für eine sogenannte prädiktive Wartung (sogenannte "predictive maintenance") des Edge-Computersystems zur Verbesserung einer Ausfallsicherheit oder Wartung bzw. zur besseren Kompensation eines tatsächlichen Ausfalls herangezogen werden.

Die Daten von Typ 2) sind z.B. für den Betreiber einer Anlage unter Einsatz des Edge-Computersystems bzw. der Edge-Computersystemlösung wichtig. Diese Daten entstehen im laufenden Betrieb oder werden für diesen herangezogen. Entsprechende Daten von Typ 1) oder Typ 2) können daher für die jeweiligen Berechtigten stark vertraulich sein und sollen bzw. müssen ggf. vor einem Zugriff durch jeweils nichtberechtigte Benutzergruppen geschützt werden. Es können hier auch gesetzliche Regelungen oder Erfordernisse eines Datenschutzes greifen.

Herkömmliche Lösungen bei Einsatz von Datenzentren bzw. Cloud-Diensten sehen lediglich ein Sammeln sämtlicher Daten am Einsatzort, Transferieren dieser Daten zu einem einzelnen Endpunkt, z.B. im Datenzentrum bzw. in der Cloud, und weiteres Aufsplitten der Daten und Weiterverteilen vor, z.B. durch sogenannte Cloud-to-Cloud-Verbindungen. Diese Lösungen bieten jedoch vielfach lediglich einen unzureichenden Schutz gegen unerlaubten Zugriff auf sensible bzw. vertrauenswürdige Daten. Auch sind Datenzentren bzw. Cloud-Dienste ein attraktives Ziel von Cyber-Angriffen, weil an diesen Endpunkten sämtliche Daten zusammenlaufen. Außerdem bringen diese Lösungen die oben im Zusammenhand mit Datenzentren bzw. Cloud-Diensten erläuterten Nachteile mit sich.

Die EP 3 208 991 A1 betrifft die Netzwerk-Sicherheit für IoT. In einem lokalen Netzwerk werden zwei drahtlose Netzwerke eingerichtet, eines für weniger sichere IoT-Geräte und eines für sicherere, konventionell vernetzte Geräte, wobei eine Brücke die Verbindung zwischen den beiden Netzwerken herstellt. Der Nachrichtenaustausch zwischen den beiden Netzwerken ist darauf zugeschnitten, das Risiko einer Sicherheitsverletzung im Netzwerk zu verringern, bei der die weniger sicheren IoT-Geräte das Netzwerk mit sichereren Geräten infizieren.

Die US 2016/328556 A1 offenbart ein System und Verfahren einer einzelnen Maschine oder eines Clusters von Maschinen, die als eine einzelne Maschine fungieren, die das Hosten von Appliances mithilfe von Virtualisierung, Containern und/oder jeglicher Art von Sandboxing zum Hosten virtueller Appliances vereinfacht und konsolidiert, wobei diese Appliance-Knoten jedoch in einer Art und Weise miteinander verbunden werden, um einen zentralisierten Knoten zu haben, der als Sicherheitszentrum, Firewall-Appliance und Informationsverteiler nicht nur für das/die lokale(n) virtuelle(n) Netzwerk(e), Maschinen, Appliances, sondern auch für physische und fremde virtuelle Netzwerke fungiert.

Die US 9 485 231 B1 offenbart, dass eine sichere Verbindung zwischen einem mobilen Gerät eines Benutzers und einem mit dem *"*Internet der Dinge" verbundenen Gerät unter Verwendung eines Internet-Gateways, das sich im öffentlichen Internet befindet, und eines lokalen Gateways, das sich in einem privates Netzwerk hinter einer Firewall befindet, bereitgestellt werden kann. Das Benutzergerät kann eine Eingabe über eine Softwareanwendung empfangen und kann basierend auf der Eingabe eine elektronische Anweisung generieren und diese dann verschlüsseln und die verschlüsselte elektronische Anweisung über eine sichere Verbindung an das Internet-Gateway senden. Nur das Benutzergerät und das lokale Gateway haben Verschlüsselungs- /Entschlüsselungsschlüssel.

Es ist Aufgabe der Erfindung ein Edge-Computersystem der eingangs erläuterten Art zu beschreiben, das eine optimale Datenverarbeitung für IoT-Anwendungen, bei gleichzeitig verbesserter Datensicherheit sensibler bzw. vertrauenswürdiger Daten für unterschiedliche Benutzergruppen des Computersystems ermöglicht.

Diese Aufgabe wird durch ein Edge-Computersystem gemäß Patentanspruch 1 gelöst. Weiterbildungen und Ausgestaltungen sind in den zugehörigen Unteransprüchen offenbart.

In dem Edge-Computersystem sind eine erste virtuelle Betriebsumgebung und eine zweite virtuelle Betriebsumgebung eingerichtet. Die virtuellen Betriebsumgebungen sind logisch voneinander getrennt. "Logische Trennung" bedeutet dabei, dass die eine Betriebsumgebung die andere Betriebsumgebung nicht ansprechen, geschweige denn eine (virtuelle) Verbindung/Netzwerkverbindung zu dieser aufbauen kann. Die virtuellen Betriebsumgebungen können z.B. als virtuelle Maschinen eingerichtet sein. Die virtuellen Betriebsumgebungen können derart implementiert sein, dass sie sich jeweils wie ein vollständiges/eigenständiges Computersystem (virtuelles Computersystem) verhalten.

Bei einem derartigen Edge-Computersystem hat somit die eine Betriebsumgebung keinen Zugriff auf die andere Betriebsumgebung. Dadurch sind Daten, die in der einen Betriebsumgebung generiert bzw. verarbeitet werden, logisch von Daten getrennt, die in der anderen Betriebsumgebung generiert bzw. verarbeitet werden. Durch Virtualisierung und logische Trennung ("Sandboxing") der Betriebsumgebungen wird eine Trennung der Daten der einzelnen Betriebsumgebungen erzielt. Eine Virtualisierung der Betriebsumgebungen ermöglicht dennoch ein flexibles Einrichten und Anpassen des Edge-Computersystems an den jeweiligen Einsatzzweck. Eine Einrichtung logisch getrennter virtualisierter Betriebsumgebungen erlaubt somit eine Vereinigung von Vorteilen eines herkömmlichen Datenzentrums bzw. Cloud-Dienstes mit den Vorteilen eines Edge-Computers zur Prozessierung von Daten daran angeschlossener IoT-Geräte bei dennoch gewährleisteter Datensicherheit.

Auf diese Weise können Daten und Informationen verschiedenster Typen in einem IoT-Einsatzszenario durch das Edge-Computersystem performant und dennoch sicher und vor allem vor unbefugtem Zugriff geschützt erfasst, verarbeitet und weitertransportiert werden. Z.B. kann die eine virtuelle Betriebsumgebung Daten umfassen, die für eine erste Benutzergruppe, z.B. den Hersteller bzw. IT-Dienstleister des Edge-Computersystems, bestimmt sind, während die andere virtuelle Betriebsumgebung Daten umfassen kann, die für eine von der ersten Benutzergruppe verschiedene Benutzergruppe, z.B. den Betreiber einer Anlage unter Einsatz des Edge-Computersystems, bestimmt sind.

In diversen Ausgestaltungen des Edge-Computersystems sind die virtuellen Betriebsumgebungen jeweils über wenigstens eine virtuelle Netzwerkverbindung, insbesondere eine virtuelle Netzwerk-Bridge, jeweils einem Kommunikationsnetzwerk logisch zugeordnet. Die virtuellen Netzwerkverbindungen sind vorteilhaft derart konfiguriert, dass ein Verbindungsaufbau aus dem Kommunikationsnetzwerk, das einer der zwei virtuellen Betriebsumgebungen zugeordnet ist, in das Kommunikationsnetzwerk, das der anderen virtuellen Betriebsumgebung zugeordnet ist, verhindert wird. Auf diese Weise ist eine logische Trennung der virtuellen Betriebsumgebungen auf einfache Weise realisierbar. Durch eine entsprechende Konfiguration der virtuellen Netzwerkverbindungen wird eine logische Trennung der virtuellen Betriebsumgebungen eingerichtet. Es ist vorteilhaft kein Verbindungsaufbau aus dem Kommunikationsnetzwerk, das einer der zwei virtuellen Betriebsumgebungen zugeordnet ist, in das Kommunikationsnetzwerk, das der anderen virtuellen Betriebsumgebung zugeordnet ist, möglich. Somit kann sich auch eine Benutzergruppe, der Zugriff auf das eine Kommunikationsnetzwerk (d.h. die eine virtuelle Betriebsumgebung) gestattet ist, nicht mit dem anderen Kommunikationsnetzwerk (d.h. der anderen virtuellen Betriebsumgebung) verbinden.

Eine Zuordnung einer jeweiligen virtuellen Betriebsumgebung zum entsprechenden Kommunikationsnetzwerk kann auf einfache Weise dadurch erfolgen, dass eine virtuelle Netzwerkverbindung, insbesondere eine virtuelle Netzwerk-Bridge, mit einem Netzwerk-Anschluss (Socket) der virtuellen Betriebsumgebung und einem Netzwerk-Anschluss (Socket) des zugehörigen Kommunikationsnetzwerkes konfiguriert wird. Auf diese Weise ist eine Datenverbindung von der virtuellen Betriebsumgebung in das Kommunikationsnetzwerk und umgekehrt möglich. Eine entsprechende Konfiguration kann z.B. mittels Software erfolgen. Z.B. kann eine (virtuelle) IP-Adresse oder ein IP-Adressraum des Kommunikationsnetzwerkes der virtuellen Betriebsumgebung zugeordnet werden, wobei eine Netzwerk-Vermittlung in der virtuellen Netzwerk-Bridge programmiert wird. Kurz gesagt wird die virtuelle Betriebsumgebung in das zugehörige Kommunikationsnetzwerk "eingehängt". Das andere Kommunikationsnetzwerk, in das die virtuelle Betriebsumgebung nicht "eingehängt" ist, ist logisch von dieser virtuellen Betriebsumgebung getrennt (und damit auch die andere virtuelle Betriebsumgebung).

In diversen Ausgestaltungen des Edge-Computersystems ist wenigstens eine der virtuellen Betriebsumgebungen vermittels der wenigstens einen, virtuellen Netzwerkverbindung an wenigstens eine physische Netzwerk-Schnittstelle angebunden. Die physische Netzwerk-Schnittstelle ist z.B. eine LAN-Schnittstelle oder eine USB-Schnittstelle. Auf diese Weise ist die virtuelle Betriebsumgebung mit physischen Netzwerk-Komponenten des Edge-Computersystems verbindbar. Die physische Netzwerk-Schnittstelle ist z.B. als I/O-Schnittstelle des physischen Edge-Computersystems eingerichtet. In diesem Fall umfasst das zugehörige Kommunikationsnetzwerk neben virtuellen Komponenten (insbesondere die virtuelle Betriebsumgebung und die virtuelle Netzwerkverbindung) auch physische Netzwerk-Komponenten. Die physische Netzwerk-Schnittstelle dient vorteilhaft zum Verbinden mit einem oder mehreren externen Geräten im IoT-Umfeld, in dem das Edge-Computersystem eingesetzt ist.

In diversen Ausgestaltungen können mehrere verschiedene physische Netzwerk-Schnittstellen vorgesehen sein, wobei die erste virtuelle Betriebsumgebung mit einer oder mehreren ersten physischen Netzwerk-Schnittstellen verbunden ist und die zweite virtuelle Betriebsumgebung mit einer oder mehreren zweiten physischen Netzwerk-Schnittstellen verbunden ist.

In diversen Ausgestaltungen ist auf dem Edge-Computersystem ein Basisbetriebssystem eingerichtet. Dieses kann z.B. ein Linux-System mit einer KVM-Infrastruktur (sogenannte "Kernelbased Virtual Machine") zur Virtualisierung und Steuerung der Betriebsumgebungen sein. Vermittels des Basisbetriebssystems ist die Konfiguration der virtuellen Netzwerkverbindungen vorgegeben. Das Basisbetriebssystem dient als Steuerkomponente für die virtuellen Netzwerkverbindungen und ist somit maßgebliche Komponente für die Konfiguration der logischen Trennung der virtuellen Betriebsumgebungen.

In diversen Ausgestaltungen des Edge-Computersystems ist die Konfiguration der virtuellen Netzwerkverbindungen fest vermittels des Basisbetriebssystems vorgegeben. Das Edge-Computersystem ist vorteilhaft derart eingerichtet, dass eine Änderung der Konfiguration der virtuellen Netzwerkverbindungen durch die jeweiligen virtuellen Betriebsumgebungen bzw. aus einem jeweiligen Kommunikationsnetzwerk heraus verhindert wird. Die Konfiguration der virtuellen Netzwerkverbindungen kann somit vorteilhaft nicht durch die definierte Infrastruktur aus den virtuellen Betriebsumgebungen bzw. Kommunikationsnetzwerken geändert werden. Eine Vorgabe der Konfiguration ist lediglich durch das Basisbetriebssystems möglich. Eine Konfiguration der virtuellen Netzwerkverbindungen kann z.B. bei Einrichten bzw. Installation des Edge-Computersystems vorgegeben werden. Z.B. kann die Konfiguration der virtuellen Netzwerkverbindungen herstellerseitig vorgegeben werden.

Vorteilhaft sind Konfigurationsdaten zur Konfiguration der virtuellen Netzwerkverbindungen in einem geschützten Bereich des Edge-Computersystems hinterlegt, wobei der Bereich gegen einen verändernden Zugriff durch die virtuellen Betriebsumgebungen bzw. aus den zugehörigen Kommunikationsnetzwerken heraus abgesichert ist. Eine derartige Absicherung kann z.B. durch einen Schreibschutz des geschützten Bereiches erfolgen. Der (Schreib-)Schutz kann derart eingerichtet sein, z.B. durch einen übergeordneten Benutzer (Superuser) vorgegeben werden, so dass der (Schreib- )Schutz nach Einrichten nicht durch Benutzer bzw. Programme oder Applikationen aufgehoben werden kann, die Zugriff/Berechtigungen hinsichtlich der virtuellen Betriebsumgebungen bzw. hinsichtlich der Kommunikationsnetzwerke haben. Der geschützte Bereich kann auch durch weitere Sicherheitsmaßnahmen, wie eine Verschlüsselung, Signierung, Authentifizierung über Schlüssel (Credentials), usw. abgesichert sein. Es ist denkbar, dass der geschützte Bereich in einem speziell (physisch und/oder logisch) abgesicherten Speicher(-Bereich) innerhalb des Edge-Computersystems eingerichtet ist. Auf diese Weise ist eine logische Trennung der virtuellen Betriebsumgebungen fest vorgegeben und kann nicht umgangen werden.

In diversen Ausgestaltungen des Edge-Computersystems ist das Basisbetriebssystem derart eingerichtet, dass ein Verbindungsaufbau jeweils aus einem der Kommunikationsnetzwerke, insbesondere aus den jeweiligen virtuellen Betriebsumgebungen, in das Basisbetriebssystem verhindert wird. Dies stellt eine weitere Sicherheitsmaßnahme gegen eine Manipulation des Edge-Computersystems zum Aushebeln der dargestellten Mechanismen dar. Ferner verhindert dies, dass eine etwaige Manipulation oder Störung innerhalb einer virtuellen Betriebsumgebung sich in eine andere virtuelle Betriebsumgebung hinein fortsetzt.

In diversen Ausgestaltungen des Edge-Computersystems weisen die virtuellen Betriebsumgebungen jeweils eine oder mehrere Firewalls auf. Diese sind eingerichtet einen Verbindungsaufbau von oder zu einer jeweiligen virtuellen Betriebsumgebung aus dem oder in das logisch zugeordnete Kommunikationsnetzwerk zu steuern. Die Firewalls können z.B. Filterregeln, insbesondere Port- und/oder IP-Adressfilterregeln vorgeben, die einen Verbindungsaufbau entsprechend steuern. Diese Filterregeln können durch die virtuellen Betriebsumgebungen vorgegeben werden. Auf diese Weise kann ein Zugriff auf die bzw. eine Ansprechbarkeit der virtuellen Betriebsumgebungen selektiv gesteuert werden. Somit sind die virtuellen Betriebsumgebungen gegen ungewollte oder gar schadhafte Zugriffe abgesichert. Optional können die Firewalls der virtuellen Betriebsumgebungen vermittels des Basisbetriebssystems gesteuert werden.

In diversen Ausgestaltungen des Edge-Computersystems sind innerhalb der virtuellen Betriebsumgebungen jeweils eine oder mehrere virtuelle (Software-) Applikationen zur Bereitstellung vorbestimmter Funktionalitäten eingerichtet. Die Applikationen können z.B. funktionsspezifisch an ein oder mehrere Aufgaben bzw. Funktionalitäten von externen Geräten angepasst sein. Z.B. können durch die Applikationen Funktionalitäten wie ein Erfassen, Verarbeiten, Prozessieren, Zuordnen, Vergleichen, Extrahieren, Umwandeln, Exportieren, Importieren, o.ä. von Daten bereitgestellt werden. Die einzelnen virtuellen Betriebsumgebungen können hierfür z.B. spezielle Anwendungen/Applikationen einer künstlichen Intelligenz (artificial intelligence, AI) oder einer komplexen Datenverarbeitung, wie z.B. sogenannte CEP-Anwendungen (complex event processing) aufweisen.

In diversen Ausgestaltungen des Edge-Computersystems ist neben der ersten und zweiten virtuellen Betriebsumgebung wenigstens eine dritte virtuelle Betriebsumgebung eingerichtet. Die dritte virtuelle Betriebsumgebung ist mit einer der zwei virtuellen Betriebsumgebungen logisch verknüpft. Z.B. ist die dritte virtuelle Betriebsumgebung mit der zweiten virtuellen Betriebsumgebung logisch verknüpft, während sie von der ersten virtuellen Betriebsumgebung logisch getrennt ist. Die dritte virtuelle Betriebsumgebung kann vorteilhaft die von der zweiten virtuellen Betriebsumgebung bereitgestellte Funktionalität erweitern bzw. ergänzen. Z.B. ist es möglich, dass durch die zweite und dritte virtuelle Betriebsumgebung verschiedene Verarbeitungsebenen oder -stufen für eine Datenverarbeitung bereitgestellt werden, wobei die Daten zwischen der zweiten und dritten virtuellen Betriebsumgebung ausgetauscht werden. Diese Daten bleiben aber von Daten innerhalb der ersten virtuellen Betriebsumgebung logisch getrennt.

Die dritte virtuelle Betriebsumgebung ist vorteilhaft über wenigstens eine virtuelle Netzwerkverbindung, insbesondere eine virtuelle Netzwerk-Bridge, mit der entsprechenden der zwei virtuellen Betriebsumgebungen (z.B. mit der zweiten Betriebsumgebung, siehe oben) logisch verknüpft. Zur Anbindung der dritten virtuellen Betriebsumgebung über die virtuelle Netzwerkverbindung gilt oben erläutertes zu den virtuellen Netzwerkverbindungen der ersten und zweiten Betriebsumgebung analog. Durch eine virtuelle Netzwerkverbindung zwischen der dritten Betriebsumgebung und der logisch mit dieser verknüpften weiteren Betriebsumgebung (z.B. die zweite Betriebsumgebung, siehe oben) ist ein (teilweise) virtuelles Kommunikationsnetz zwischen diesen beiden virtuellen Betriebsumgebungen eingerichtet, sodass die virtuellen Betriebsumgebungen miteinander und ggf. auch nach extern, z.B. mit externen Geräten, kommunizieren können.

In diversen Ausgestaltungen des Edge-Computersystems ist die erste virtuelle Betriebsumgebung als Hersteller-Umgebung eingerichtet zum Erfassen bzw. Verarbeiten bzw. Abfragen von (internen) Systemdaten des Edge-Computersystems oder von externen Systemen bzw. Geräten, insbesondere Maschinendaten, Regelgrößen, Messwerten oder Parametern. Durch die erste virtuelle Betriebsumgebung werden Telemetriedaten des Edge-Computersystems selbst oder von externen Systemen bzw. Geräten, die mit dem Edge-Computersystem verbunden sind, erfasst und verarbeitet. Die erste virtuelle Betriebsumgebung kann hierzu Komponenten, insbesondere Erfassungs-, Verarbeitungs- bzw. Abfrage-Komponenten, wie z.B. Sensoren, Applikationen, Management-Controller, Kernel, Busse usw. aufweisen oder von physischen Ressourcen des Edge-Computersystems heranziehen. Vermittels der ersten virtuellen Betriebsumgebung kann somit ein Hersteller auf einfache Weise Daten des Edge-Computersystems oder von externen Systemen bzw. Geräten sammeln und auswerten, z.B. für eine prädiktive Wartung. Die erste virtuelle Betriebsumgebung kann hierfür über eine physische Netzwerk-Schnittstelle an ein externes physisches Wartungs-Netzwerk angebunden sein. Dies kann z.B. ein OPC UA-Netzwerk sein (OPC UA steht für "Open Platform Communications Unified Architecture").

In diversen Ausgestaltungen des Edge-Computersystems ist die zweite virtuelle Betriebsumgebung als Betreiber-Umgebung eingerichtet zum Erfassen bzw. Verarbeiten bzw. Steuern von (externen) Betriebsdaten von oder für externe Systeme bzw. Geräte, insbesondere Sensordaten, Steuerdaten, Anlagendaten, personenbezogene Daten, insbesondere biometrische Daten, oder Kommunikationsdaten von oder für die externen Systeme bzw. Geräte. Durch die zweite virtuelle Betriebsumgebung werden somit Daten von und zu externen Geräten, Anlagen oder Systemen verarbeitet, mit denen das Edge-Computersystem am Einsatzort verbunden ist. Die zweite virtuelle Betriebsumgebung kann hierzu Komponenten, insbesondere Erfassungs-, Verarbeitungs- bzw. Abfrage-Komponenten, wie z.B. Sensoren, Applikationen, Management-Controller, Kernel, Busse usw. aufweisen oder von physischen Ressourcen des Edge-Computersystems heranziehen. Vermittels der zweiten virtuellen Betriebsumgebung kann somit ein Betreiber des Edge-Computersystems die mit diesem verbundenen externen Komponenten bzw. Geräte seiner Anlage oder seines Systems steuern. Die zweite virtuelle Betriebsumgebung kann hierfür über eine physische Netzwerk-Schnittstelle an ein oder mehrere externe physische Steuer-Netzwerke angebunden sein. Diese können z.B. ein LAN-Netzwerk, USB-Netzwerk oder ein spezielles Steuerbus-Netzwerk, wie z.B. MODBUS, umfassen.

Vorteilhaft findet das hier erläuterte Edge-Computersystem Anwendung innerhalb einer Anordnung nach Patentanspruch 13. Die Anordnung weist das Edge-Computersystem der erläuterten Art sowie wenigstens ein externes System bzw. Gerät auf, mit dem das Edge-Computersystem verbunden ist. Die erste virtuelle Betriebsumgebung ist logisch mit dem externen System bzw. Gerät verknüpft. Die zweite virtuelle Betriebsumgebung kann logisch getrennt vom externen System bzw. Gerät eingerichtet sein. Alternativ kann die zweite virtuelle Betriebsumgebung ebenfalls logisch mit dem externen System bzw. Gerät verknüpft sein. Diese logische Verknüpfung ist vorteilhaft derart zu implementieren, dass keine manipulative Beeinträchtigung einer logischen Trennung der ersten und zweiten virtuellen Betriebsumgebungen möglich ist oder zumindest stark erschwert wird. Auf diese Weise bleibt die hier erläuterte Funktionalität des Edge-Computersystems erhalten. Z.B. kann vorgegeben sein, dass jeweils aus der ersten und zweiten virtuellen Betriebsumgebung an das externe System bzw. Gerät keine zu schützenden oder vertraulichen Daten herausgegeben werden, sondern lediglich Steuerdaten. Alternativ oder zusätzlich können jeweilige Verbindungen zwischen dem externen System bzw. Gerät und der jeweiligen ersten und zweiten virtuellen Betriebsumgebung speziell abgesichert sein. Hierfür kommen Sicherungsmaßnahmen, wie eine Verschlüsselung, Signierung, Protokollwechsel, Firewalls usw. in Betracht, um einen Zugriff auf vertrauliche Daten innerhalb einer der virtuellen Betriebsumgebungen durch die andere virtuelle Betriebsumgebung zu verhindern bzw. stark zu erschweren und eine logische Trennung der beiden Betriebsumgebungen zu gewährleisten.

Das externen System bzw. Gerät kann z.B. ein Sensor, ein Steuergerät (z.B. eine speicherprogrammierbare Steuerung, SPS) oder ein Verarbeitungs-, Management- bzw. Datenserver, insbesondere ein Cloud-Server, oder eine Kombination solcher Systeme bzw. Geräte sein.

Die Anordnung kann vorteilhaft derart weitergebildet sein, dass das Edge-Computersystem mit zumindest einem weiteren externen System bzw. Gerät verbunden ist, wobei die zweite virtuelle Betriebsumgebung logisch mit dem weiteren externen System bzw. Gerät verknüpft ist. Die erste virtuelle Betriebsumgebung kann logisch getrennt vom weiteren externen System bzw. Gerät eingerichtet sein. Alternativ kann die erste virtuelle Betriebsumgebung ebenfalls logisch mit dem weiteren externen System bzw. Gerät verknüpft sein. Diese logische Verknüpfung ist vorteilhaft derart zu implementieren, dass keine manipulative Beeinträchtigung einer logischen Trennung der ersten und zweiten virtuellen Betriebsumgebungen möglich ist oder zumindest stark erschwert wird. Auf diese Weise bleibt die hier erläuterte Funktionalität des Edge-Computersystems erhalten. Hierzu können die oben erläuterten Maßnahmen analog angewendet werden.

Auch das weitere externe System bzw. Gerät kann z.B. ein Sensor, ein Steuergerät (z.B. eine speicherprogrammierbare Steuerung, SPS) oder ein Verarbeitungs-, Management- bzw. Datenserver, insbesondere ein Cloud-Server, oder eine Kombination solcher Systeme bzw. Geräte sein.

Die Erfindung wird anhand eines Ausführungsbeispiels unter Zuhilfenahme einer Zeichnung im Folgenden näher erläutert.

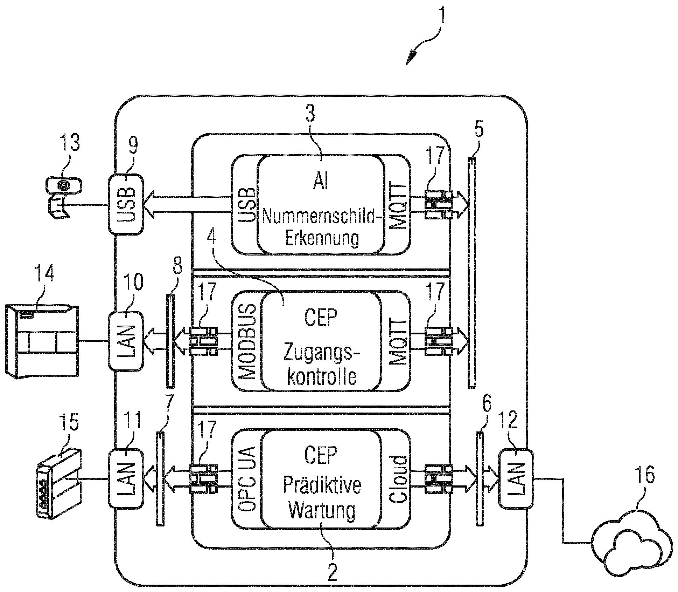

Die Figur zeigt ein IoT-Computersystem 1. Das IoT-Computersystem kann auch als Edge-Computersystem bezeichnet werden. Das IoT-Computersystem 1 weist eine erste virtuelle Betriebsumgebung 2, eine zweite virtuelle Betriebsumgebung 3 und eine dritte virtuelle Betriebsumgebung 4 auf. Die virtuellen Betriebsumgebungen 2, 3, 4 sind z.B. als virtuelle Maschinen innerhalb des IoT-Computersystems 1 organisiert/eingerichtet.

Die virtuellen Betriebsumgebungen 2, 3, 4 können derart implementiert sein, dass sie sich jeweils wie ein vollständiges/eigenständiges Computersystem (virtuelles Computersystem) verhalten. Die virtuellen Betriebsumgebungen 2, 3, 4 stellen jeweils anwendungsspezifische Funktionalitäten für den Betrieb des IoT-Computersystems 1 bereit. Das IoT-Computersystem 1 ist mit diversen externen Geräten bzw. Systemen verbunden. Hierzu sind beispielhaft abgebildet eine Webcam 13, eine speicherprogrammierbare Steuerung (SPS) 14, ein Management- bzw. Wartungs-Server 15 und ein Cloud-Server bzw. Cloud-Dienst 16. Die externen Geräte 13, 14, 15 und 16 können mit dem IoT-Computersystem 1 kommunizieren und mit diesem Daten austauschen.

Die erste virtuelle Betriebsumgebung 2 ist als Hersteller-Umgebung eingerichtet zum Erfassen bzw. Verarbeiten bzw. Abfragen von internen Systemdaten des IoT-Computersystems 1, insbesondere Maschinendaten, Regelgrößen, Messwerten oder Parametern des IoT-Computersystems 1. Durch die erste virtuelle Betriebsumgebung 2 werden Telemetriedaten des IoT-Computersystems 1 selbst erfasst und verarbeitet. Die erste virtuelle Betriebsumgebung 2 weist hierzu virtuelle Komponenten, insbesondere Erfassungs-, Verarbeitungs- bzw. Abfrage-Komponenten, wie z.B. Sensoren, Applikationen, Management-Controller, Kernel, Busse usw. auf oder zieht diese von physischen Ressourcen des IoT-Computersystems 1 heran. Vermittels der ersten virtuellen Betriebsumgebung 2 kann somit ein Hersteller auf einfache Weise Daten des IoT-Computersystems 1, z.B. für eine prädiktive Wartung, sammeln und auswerten. Die erste virtuelle Betriebsumgebung 2 ist hierfür über virtuelle Netzwerkverbindungen, z.B. virtuelle Netzwerk-Bridges, 6 und 7 sowie über daran wiederum angebundene physische Netzwerk-Schnittstellen 11 und 12 an ein oder mehrere externe physische Wartungs- bzw. Management-Netzwerke angebunden. Die physischen Netzwerk-Schnittstellen 11 und 12 sind z.B. LAN-Schnittstellen des IoT-Computersystems 1. Zwischen der ersten virtuellen Betriebsumgebung 2 und den virtuellen Netzwerkverbindungen 6, 7, ist jeweils eine Firewall 17 zwischengeschaltet, die von der ersten virtuellen Betriebsumgebung 2 gesteuert wird und diese gegen unerlaubte Verbindungen aus bzw. in die externen physischen Wartungs- bzw. Management-Netzwerke absichert.

Über die Netzwerk-Schnittstelle 11 ist die erste virtuelle Betriebsumgebung 2 mit dem Management- bzw. Wartungs-Server 15 verbunden. Diese Verbindung kann z.B. ein OPC UA-Netzwerk sein. Der Management- bzw. Wartungs-Server 15 ist dabei z.B. ein OPC UA-Server. Über die Netzwerk-Schnittstelle 11 ist die erste virtuelle Betriebsumgebung 2 mit dem Cloud-Server bzw. Cloud-Dienst 16 verbunden. Auf diese Weise bilden die erste virtuelle Betriebsumgebung 2 sowie die Geräte 15 und 16 ein Kommunikationsnetzwerk (Herstellernetzwerk).

Die zweite virtuelle Betriebsumgebung 3 und die dritte virtuelle Betriebsumgebung 4 sind als gemeinsame Betreiber-Umgebung eingerichtet zum Erfassen bzw. Verarbeiten bzw. Steuern von externen Betriebsdaten von oder für die weiteren externe Systeme bzw. Geräte 13 und 14, insbesondere von Sensordaten, Steuerdaten, Anlagendaten, personenbezogenen Daten oder Kommunikationsdaten von oder für die externen Systeme bzw. Geräte 13, 14. Durch die zweite und dritte virtuelle Betriebsumgebung 3, 4 werden somit Daten von und zu den externen Geräten 13, 14 verarbeitet. Die zweite und dritte virtuelle Betriebsumgebung 3, 4 weisen hierzu virtuelle Komponenten, insbesondere Erfassungs-, Verarbeitungs- bzw. Abfrage-Komponenten, wie z.B. Sensoren, Applikationen, Management-Controller, Kernel, Busse usw. auf oder ziehen diese von physischen Ressourcen des IoT-Computersystems 1 heran. Vermittels der zweiten und dritten virtuellen Betriebsumgebung 3, 4 kann somit ein Betreiber des IoT-Computersystems 1 die mit diesem verbundenen externen Geräte 13, 14 seiner Anlage oder seines Systems steuern.

Die zweite virtuelle Betriebsumgebung 3 ist über eine oder mehrere virtuelle Netzwerkverbindungen, z.B. virtuelle Netzwerk-Bridges, 5 mit der dritten virtuellen Betriebsumgebung 4 logisch verbunden. Das bedeutet, dass die zweite und dritte Betriebsumgebung 3, 4 miteinander kommunizieren und Daten austauschen können. Ferner ist die zweite Betriebsumgebung 3 über eine oder mehrere virtuelle Netzwerkverbindungen (in der Figur nicht explizit dargestellt) sowie über eine daran wiederum angebundene physische Netzwerk-Schnittstelle 9 mit dem Gerät 13 verbunden. Die dritte virtuelle Betriebsumgebung 4 ist über eine oder mehrere virtuelle Netzwerkverbindungen, z.B. virtuelle Netzwerk-Bridges, 8 sowie über eine daran wiederum angebundene physische Netzwerk-Schnittstelle 10 mit dem Gerät 14 verbunden. Zwischen der zweiten virtuellen Betriebsumgebung 3 und der virtuellen Netzwerkverbindung 5 ist eine Firewall 17 zwischengeschaltet, die von der zweiten virtuellen Betriebsumgebung 3 gesteuert wird und diese gegen unerlaubte Verbindungen aus bzw. in die virtuelle Netzwerkverbindung 5 absichert. Zwischen der dritten virtuellen Betriebsumgebung 4 und den virtuellen Netzwerkverbindungen 5 bzw. 8 ist jeweils eine Firewall 17 zwischengeschaltet, die von der dritten virtuellen Betriebsumgebung 4 gesteuert wird und diese gegen unerlaubte Verbindungen aus bzw. in die virtuelle Netzwerkverbindung 5 bzw. in das externe Netzwerk zum Gerät 14 hin absichert.

Die physische Netzwerk-Schnittstelle 9 ist z.B. eine USB-Schnittstelle, während die physische Netzwerk-Schnittstelle 10 z.B. eine LAN-Schnittstelle des IoT-Computersystems 1 ist. Auf diese Weise sind die zweite und dritte Betriebsumgebung 3, 4 sowohl untereinander als auch über physische Netzwerk-Schnittstellen an ein oder mehrere externe physische Steuer- bzw. Daten-Netzwerke (von und zu den Geräten 13 und 14) angebunden. Diese umfassen ein LAN-Netzwerk, USB-Netzwerk oder ein spezielles Steuerbus-Netzwerk, z.B. zwischen dem Gerät 14 und dem IoT-Computersystem 1. Das Steuerbus-Netzwerk kann z.B. ein MODBUS-Netzwerk umfassen. Auf diese Weise bilden die zweite und dritte virtuelle Betriebsumgebung 3, 4 sowie die Geräte 13 und 14 ein Kommunikationsnetzwerk (Betreibernetzwerk) .

Eine übergeordnete Steuerung bzw. Konfiguration der einzelnen virtuellen Betriebsumgebungen 2, 3, 4 bzw. der virtuellen Netzwerkverbindungen 5, 6, 7, 8 zwischen den virtuellen Betriebsumgebungen 2, 3, 4 bzw. den externen Geräten 13, 14, 15, 16 erfolgt über ein Basisbetriebssystem (nicht explizit dargestellt) des IoT-Computersystems 1. Das Basisbetriebssystem kann z.B. ein Linux-System mit einem integrierten KVM-System sein. Das Basisbetriebssystem gibt insbesondere eine definierte Konfiguration der virtuellen Netzwerkverbindungen 5, 6, 7, 8 vor. Diese Konfiguration ist vorteilhaft derart fest vorbestimmt, dass sie durch die einzelnen virtuellen Betriebsumgebungen 2, 3, 4 bzw. durch die externen Geräte 13, 14, 15, 16 oder allgemein aus den entsprechenden Netzwerken heraus nicht verändert werden kann. Z.B. wird die Konfiguration der virtuellen Netzwerkverbindungen 5, 6, 7, 8 bei Einrichten bzw. Installation des IoT-Computersystems 1 vorgegeben. Z.B. kann die Konfiguration der virtuellen Netzwerkverbindungen 5, 6, 7, 8 herstellerseitig vorgegeben werden.

Vorteilhaft sind Konfigurationsdaten zur Konfiguration der virtuellen Netzwerkverbindungen 5, 6, 7, 8 in einem geschützten Bereich des IoT-Computersystems 1 hinterlegt, wobei der Bereich gegen einen verändernden Zugriff durch die virtuellen Betriebsumgebungen 2, 3, 4 bzw. aus den zugehörigen Kommunikationsnetzwerken von und zu den externen Geräten 13, 14, 15, 16 heraus abgesichert ist. Eine derartige Absicherung kann z.B. durch einen Schreibschutz des geschützten Bereiches erfolgen. Der (Schreib-)Schutz kann derart eingerichtet sein, z.B. durch einen übergeordneten Benutzer (Superuser) vorgegeben werden, so dass der (Schreib- )Schutz nach Einrichten nicht durch Benutzer bzw. Programme oder Applikationen aufgehoben werden kann, die Zugriff/Berechtigungen hinsichtlich der virtuellen Betriebsumgebungen 2, 3, 4 bzw. hinsichtlich der Kommunikationsnetzwerke von und zu den externen Geräten 13, 14, 15, 16 haben. Der geschützte Bereich kann auch durch weitere Sicherheitsmaßnahmen, wie eine Verschlüsselung, Signierung, Authentifizierung über Schlüssel (Credentials), usw. abgesichert sein. Es ist denkbar, dass der geschützte Bereich in einem speziell (physisch und/oder logisch) abgesicherten Speicher(-Bereich) innerhalb des IoT-Computersystems 1 eingerichtet ist.

Die Konfiguration der virtuellen Netzwerkverbindungen 5, 6, 7, 8 ist derart vorgegeben, dass keine logische Verbindung zwischen der ersten virtuellen Betriebsumgebung 2 und einer der zweiten oder dritten virtuellen Betriebsumgebung 3, 4 besteht. Das bedeutet, dass die erste virtuelle Betriebsumgebung 2 von der zweiten und dritten virtuellen Betriebsumgebung 3, 4 logisch getrennt ist. Es ist kein Verbindungsaufbau in beiden Richtungen zwischen der ersten virtuellen Betriebsumgebung 2 und einer der zweiten oder dritten virtuellen Betriebsumgebung 3, 4 möglich. Dies wird dadurch erzielt, dass kein logischer Netzwerk-Anschluss (Socket) innerhalb der virtuellen Netzwerkverbindungen 5, 6, 7, 8 eingerichtet ist, der eine Verbindung zwischen der ersten virtuellen Betriebsumgebung 2 und einer der zweiten oder dritten virtuellen Betriebsumgebung 3, 4 zulässt. Das bedeutet wiederum, dass auch kein Verbindungsaufbau von einem der externen Geräte 13 und 14 in die erste virtuelle Betriebsumgebung 2 möglich ist bzw. auch kein Verbindungsaufbau von einem der externen Geräte 15 und 16 in eine der zweiten oder dritten virtuellen Betriebsumgebung 3, 4 möglich ist.

Auf diese Weise ist eine Hersteller-Umgebung, realisiert durch die erste virtuelle Betriebsumgebung 2, logisch getrennt von einer Betreiber-Umgebung, gemeinsam realisiert durch die zweite und dritte virtuelle Betriebsumgebung 3, 4. Somit sind vertrauliche bzw. schützenswerte Daten innerhalb der Hersteller-Umgebung logisch separiert und getrennt von Daten innerhalb der Betreiber-Umgebung. Ein autorisierter Benutzer, Gerät, System oder Software-Programm innerhalb der Hersteller-Umgebung hat keine Zugriffsmöglichkeit auf Daten innerhalb der Betreiber-Umgebung und umgekehrt. Ein derartiger Zugriff ist mangels einer definierten bzw. bewusst verhinderten Netzwerkverbindung unterbunden. Die Hersteller-Umgebung kann ausschließlich über die Netzwerkverbindungen 6, 7, 11, 12 mit den Geräten 15, 16 kommunizieren. Die Betreiber-Umgebung kann ausschließlich über die Netzwerkverbindungen 5, 8, 9, 10 mit den Geräten 13, 14 kommunizieren.

Ein mögliches Anwendungsszenario der dargestellten Anordnung mit dem IoT-Computersystem 1 und den externen Geräten 13, 14, 15, 16 ist z.B. ein Parkplatz-System mit einer Schrankenanlage. Die Webcam 13 erfasst Kennzeichen von Kraftfahrzeugen, die in das Parkplatz-System ein oder ausfahren. Die Bild-Daten der Webcam 13 werden vermittels der Netzwerkverbindung 9 an die zweite virtuelle Betriebsumgebung 3 innerhalb des physischen IoT-Computersystems 1 gesendet. Innerhalb der zweiten virtuellen Betriebsumgebung 3 erfolgt vermittels einer oder mehrerer virtueller Applikationen einer künstlichen Intelligenz (AI) eine Verarbeitung der Bild-Daten der Webcam 13. Dies kann z.B. eine Extraktion von Buchstaben und Zahlen aus den Bild-Daten der Webcam 13 und das Bereitstellen der Buchstaben und Zahlen als Zeichenkette umfassen. Diese Zeichenkette wird vermittels der Netzwerkverbindung 5 der dritten virtuellen Betriebsumgebung 4 innerhalb des physischen IoT-Computersystems 1 übergeben. Innerhalb der dritten virtuellen Betriebsumgebung 4 erfolgt vermittels einer oder mehrerer virtueller Applikationen einer komplexen Datenverarbeitung (CEP) ein Vergleich der Zeichenkette mit hinterlegten Vergleichsmustern. Hier können auch personenbezogene Daten, z.B. Halterdaten des Kraftfahrzeuges, oder auch Uhrzeiten, Zeitstempel, Kreditkartendaten des Halters des Kraftfahrzeuges, usw. ausgewertet werden. Diese Daten können z.B. in einer Datenbank innerhalb der virtuellen Betriebsumgebung 4 gespeichert sein. Auf diese Weise kann ermittelt werden, ob ein Kraftfahrzeug mit dem erfassten Kennzeichen einen erlaubten Zutritt zu dem Parkplatz-System oder eine erlaubte Ausfahrt aus dem Parkplatz-System (z.B. nach einem gültigen Bezahlvorgang, o.ä.) hat.

Wird dies innerhalb der virtuellen Betriebsumgebung 4 bestätigt, so sendet die virtuelle Betriebsumgebung 4 vermittels der Netzwerkverbindungen 8, 10 ein entsprechendes Steuersignal an die SPS 14, welche wiederum die Schrankenanlage ansteuert, sodass eine Schranke geöffnet wird. Das registrierte Kraftfahrzeug kann dann ein- oder ausfahren.

Unabhängig und logisch getrennt von der zweiten und dritten Betriebsumgebung 3, 4 (Betreiber-Umgebung des Parkplatz-Systems) kann ein Hersteller, z.B. des Schrankensystems oder nur des IoT-Computersystems 1, das im Parkplatz-System des Betreibers eingesetzt wird, innerhalb der Hersteller-Umgebung 2 Telemetrie-Daten des Schrankensystems oder des IoT-Computersystems 1 (z.B. Systemparameter des IoT-Computersystems 1) vermittels des Management-Servers 15 erfassen und auswerten bzw. über den Cloud-Dienst bzw. Cloud-Server 16 erfassen und auswerten. Zumindest innerhalb des IoT-Computersystems 1 kann der Hersteller jedoch keine Verbindung zu Komponenten der virtuellen Betriebsumgebungen 3, 4 aufbauen. Somit erhält der Hersteller keinen Zugriff auf Daten, z.B. Bild-Daten der Webcam 13 oder personenbezogene Daten, z.B. von Haltern der identifizierten Kraftfahrzeuge, innerhalb der virtuellen Betriebsumgebungen 3, 4. Umgekehrt erhält der Betreiber keinen Zugriff auf Daten, z.B. interne Geräte-Daten, Implementierungen, usw. entweder des IoT-Computersystems 1 als solchem bzw. der Geräte 15, 16 und ggf. 14, die in Herstellerhand sind.

Es ist möglich, dass externe Geräte, z.B. die Geräte 14 und 15, über externe Netzwerke außerhalb des IoT-Computersystems 1 Daten austauschen können. Z.B. kann die SPS 14 dem Management-Server 15 Steuerdaten (z.B. Anzahl der Öffnungs- und Schließvorgänge, Fehlersituationen oder Fehlercodes, usw.) der Schrankenanlage zur Verfügung stellen. Diese Steuerdaten können dann vom Management-Server 15 in die virtuelle Betriebsumgebung 2 innerhalb des IoT-Computersystems 1 eingegeben und dort für eine prädiktive Wartung und Überprüfung des Betriebsverhaltens der Schrankenanlage ausgewertet werden. Eine externe Verbindung der Geräte 14 und 15 ist vorteilhaft derart abzusichern bzw. zu implementieren, dass kein ungewollter Bypass oder eine Manipulationsmöglichkeit zwischen den an sich logisch getrennten virtuellen Betriebsumgebungen 3, 4, und der virtuellen Betriebsumgebung 2 entsteht. Dies kann z.B. dadurch erreicht werden, dass aus den virtuellen Betriebsumgebungen 3, 4 an das Gerät 14 keine zu schützenden Betreiber-Informationen herausgegeben werden, sondern lediglich Steuerdaten. Umgekehrt kann dies z.B. dadurch erreicht werden, dass aus der virtuellen Betriebsumgebung 2 an das Gerät 15 keine zu schützenden Hersteller-Informationen herausgegeben werden, sondern lediglich Steuerdaten. Entsprechende Verbindungen können speziell gegen Manipulationen abgesichert sein, z.B. über die jeweiligen Firewalls 17.

Die dargestellte Ausführungsform und das erläuterte Anwendungsszenario sind lediglich beispielhaft gewählt. Es sind vielerlei Ausführungen und Anwendungen denkbar. Insbesondere im industriellen Anlagenumfeld, z.B. bei Windkraft- oder Solaranlagen oder in der industriellen Fertigung und Herstellung von Produkten ergeben sich zahlreiche Anwendungsbeispiele. Der Umfang der Erfindung wird durch die angehängten Ansprüche definiert.

In nicht dargestellten Ausführungsformen können auch die virtuellen Betriebsumgebungen 3 und 4 logisch voneinander getrennt sein, um Datenmissbrauch zwischen diesen Betriebsumgebungen vorzubeugen.

### Bezugszeichenliste

- 1: IoT-Computersystem
- 2: erste virtuelle Betriebsumgebung
- 3: zweite virtuelle Betriebsumgebung
- 4: dritte virtuelle Betriebsumgebung
- 5: virtuelle Netzwerkverbindung
- 6: virtuelle Netzwerkverbindung
- 7: virtuelle Netzwerkverbindung
- 8: virtuelle Netzwerkverbindung
- 9: physische Netzwerkverbindung
- 10: physische Netzwerkverbindung
- 11: physische Netzwerkverbindung
- 12: physische Netzwerkverbindung
- 13: Webcam
- 14: Speicherprogrammierbare Steuerung
- 15: Management-Server
- 16: Cloud-Server
- 17: Firewall

## Patentansprüche

1. Internet-of-Things, IoT, Edge-Computersystem, in dem eine erste virtuelle Betriebsumgebung (2) und eine zweite virtuelle Betriebsumgebung (3) eingerichtet sind, wobei
- die erste virtuelle Betriebsumgebung (2) als Hersteller-Umgebung eingerichtet ist zum Erfassen, Verarbeiten und/oder Abfragen von Systemdaten des Edge-Computersystems selbst oder von einem oder mehreren externen Systemen oder Geräten (13, 14, 15, 16), die mit dem Edge-Computersystem verbunden sind,
- die zweite virtuelle Betriebsumgebung (3) als Betreiber-Umgebung eingerichtet ist zum Erfassen, Verarbeiten und/oder Steuern von Betriebsdaten, von bzw. für das eine oder die mehreren externen Systeme oder Geräte (13, 14, 15, 16),
- die virtuellen Betriebsumgebungen (2, 3) logisch derart voneinander getrennt sind, dass die eine virtuelle Betriebsumgebung (2, 3) keinen Zugriff auf die andere virtuelle Betriebsumgebung (2, 3) hat,
- die virtuellen Betriebsumgebungen (2, 3) jeweils über wenigstens eine virtuelle Netzwerkverbindung (5, 6, 7, 8) jeweils einem Kommunikationsnetzwerk logisch zugeordnet sind, und
- die virtuellen Netzwerkverbindungen (5, 6, 7, 8) derart konfiguriert sind, dass ein Verbindungsaufbau aus dem Kommunikationsnetzwerk, das einer der zwei virtuellen Betriebsumgebungen (2, 3) zugeordnet ist, in das Kommunikationsnetzwerk, das der anderen virtuellen Betriebsumgebung (2, 3) zugeordnet ist, verhindert wird.

2. IoT-Egde-Computersystem nach Anspruch 1, wobei wenigstens
eine der virtuellen Betriebsumgebungen (2, 3) vermittels der wenigstens einen, virtuellen Netzwerkverbindung (5, 6, 7, 8) an wenigstens eine physische Netzwerk-Schnittstelle (9, 10, 11, 12) angebunden ist.

3. IoT-Edge-Computersystem nach Anspruch 1 oder 2, auf dem ein Basisbetriebssystem, insbesondere ein Linux-System mit einer KVM-Infrastruktur, eingerichtet ist, wobei vermittels des Basisbetriebssystems die Konfiguration der virtuellen Netzwerkverbindungen (5, 6, 7, 8) vorgegeben ist.

4. IoT-Edge-Computersystem nach Anspruch 3, wobei die Konfiguration der virtuellen Netzwerkverbindungen (5, 6, 7, 8) fest vermittels des Basisbetriebssystems vorgegeben ist und das Edge-Computersystem derart eingerichtet ist, dass eine Änderung der Konfiguration der virtuellen Netzwerkverbindungen (5, 6, 7, 8) durch die jeweiligen virtuellen Betriebsumgebungen (2, 3) bzw. aus einem jeweiligen Kommunikationsnetzwerk heraus verhindert wird.

5. IoT-Edge-Computersystem nach Anspruch 4, wobei Konfigurationsdaten zur Konfiguration der virtuellen Netzwerkverbindungen (5, 6, 7, 8) in einem geschützten, insbesondere schreibgeschützten, Bereich des Edge-Computersystems hinterlegt sind.

6. IoT-Edge-Computersystem nach einem der Ansprüche 3 bis 5, wobei das Basisbetriebssystem derart eingerichtet ist, dass ein Verbindungsaufbau jeweils aus einem der Kommunikationsnetzwerke, insbesondere aus den jeweiligen virtuellen Betriebsumgebungen (2, 3), in das Basisbetriebssystem verhindert wird.

7. IoT-Edge-Computersystem nach einem der Ansprüche 1 bis 6,
wobei die virtuellen Betriebsumgebungen (2, 3) jeweils eine oder mehrere Firewalls (17) aufweisen, die eingerichtet sind einen Verbindungsaufbau von oder zu einer jeweiligen virtuellen Betriebsumgebung (2, 3) aus dem oder in das logisch zugeordnete Kommunikationsnetzwerk zu steuern.

8. IoT-Edge-Computersystem nach einem der Ansprüche 1 bis 7,
wobei innerhalb der virtuellen Betriebsumgebungen (2, 3) jeweils eine oder mehrere virtuelle Applikationen zur Bereitstellung vorbestimmter Funktionalitäten eingerichtet sind.

9. IoT-Edge-Computersystem nach einem der Ansprüche 1 bis 8,
wobei wenigstens eine dritte virtuelle Betriebsumgebung (4) eingerichtet ist, die mit einer der zwei virtuellen Betriebsumgebungen (2, 3) logisch verknüpft ist.

10. IoT-Edge-Computersystem nach Anspruch 9, wobei die dritte
virtuelle Betriebsumgebung (4) über wenigstens eine virtuelle Netzwerkverbindung (5, 6, 7, 8), insbesondere eine virtuelle Netzwerk-Bridge, mit der entsprechenden der zwei virtuellen Betriebsumgebungen (2, 3) logisch verknüpft ist.

11. IoT-Edge-Computersystem nach einem der Ansprüche 1 bis 10,
wobei
- Systemdaten die Maschinendaten, Regelgrößen, Messwerten oder Parametern umfassen, oder
- die Betriebsdaten in Zusammenhang mit der Verwendung des Edge-Computersystems an dessen Einsatzort stehen und Sensordaten, Steuerdaten, Anlagendaten, personenbezogene Daten, insbesondere biometrische Daten, oder Kommunikationsdaten von oder für das eine oder die mehreren externen Systeme bzw. Geräte (13, 14, 15, 16) umfassen.

12. IoT-Edge-Computersystem nach einem der Ansprüche 1 bis 11,
wobei die virtuellen Betriebsumgebungen (2, 3) jeweils über eine virtuelle Netzwerk-Bridge jeweils dem Kommunikationsnetzwerk logisch zugeordnet sind.

13. Anordnung mit einem IoT-Edge-Computersystem nach einem der Ansprüche 1 bis 12 und einem externen System bzw. Gerät (13, 14, 15, 16), mit dem das Edge-Computersystem verbunden ist, wobei die erste virtuelle Betriebsumgebung (2) logisch mit dem externen System bzw. Gerät (13, 14, 15, 16) verknüpft ist.

14. Anordnung nach Anspruch 13, wobei das externe System bzw. Gerät (13, 14, 15, 16) ein Sensor, ein Steuergerät oder ein Verarbeitungs- bzw. Datenserver, insbesondere ein Cloud-Server, ist.

15. Anordnung nach Anspruch 13 oder 14, wobei das IoT-Edge-Computersystem mit einem weiteren externen System bzw. Gerät (13, 14, 15, 16) verbunden ist, wobei die zweite virtuelle Betriebsumgebung (3) logisch mit dem weiteren externen System bzw. Gerät (13, 14, 15, 16) verknüpft ist.

## Claims

1. Internet-of-Things, IoT, edge computer system, in which a first virtual operational environment (2) and a second virtual operational environment (3) are set up, wherein
- the first virtual operative environment (2) is set up as a producer environment for collecting, processing and/or querying system data of the edge computer system itself or of one or more external systems or devices (13, 14, 15, 16) connected to the edge computer system,
- the second virtual operational environment (3) is arranged as an operator environment for collecting, processing and/or controlling operational data from or for the one or more external systems or devices (13, 14, 15, 16),
- the virtual operational environments (2, 3) are logically separated from each other in such a way that one virtual operational environment (2, 3) has no access to the other virtual operational environment (2, 3),
- the virtual operational environments (2, 3) are each logically assigned to a communication network via at least one virtual network connection (5, 6, 7, 8), and
- the virtual network connections (5, 6, 7, 8) are configured in such a way that a connection establishment from the communication network assigned to one of the two virtual operational environments (2, 3) to the communication network assigned to the other virtual operational environment (2, 3) is prevented.

2. The IoT edge computer system according to claim 1, wherein at least one of the virtual operational environments (2, 3) is linked to at least one physical network interface (9, 10, 11, 12) by means of the at least one virtual network connection (5, 6, 7, 8).

3. The IoT edge computer system according to claim 1 or 2, on which a base operating system, in particular a Linux system having a KVM infrastructure, is set up, wherein the configuration of the virtual network connections (5, 6, 7, 8) is predetermined by means of the base operating system.

4. The IoT edge computer system according to claim 3, wherein the configuration of the virtual network connections (5, 6, 7, 8) is fixedly predetermined by means of the base operating system and the edge computer system is set up in such a way that changing the configuration of the virtual network connections (5, 6, 7, 8) by the respective virtual operational environments (2, 3) or from a respective communication network is prevented.

5. The IoT edge computer system according to claim 4, wherein configuration data for configuring the virtual network connections (5, 6, 7, 8) is stored in a protected, in particular write-protected, area of the edge computer system.

6. The IoT edge computer system according to any one of claims 3 to 5, wherein the basic operating system is set up in such a way that a connection establishment in each case from one of the communication networks, in particular from the respective virtual operational environments (2, 3), into the base operating system is prevented.

7. The IoT edge computer system according to any one of claims 1 to 6, wherein the virtual operational environments (2, 3) each comprise one or more firewalls (17) which are set up to control a connection establishment from or to a respective virtual operative environment (2, 3) from or into the logically associated communication network.

8. The IoT edge computer system according to any one of claims 1 to 7, wherein one or more virtual applications for providing predetermined functionalities are set up within the virtual operative environments (2, 3) in each case.

9. The IoT edge computer system according to any one of claims 1 to 8, wherein at least a third virtual operational environment (4) is set up which is logically connected to one of the two virtual operational environments (2, 3).

10. The IoT edge computer system according to claim 9, wherein the third virtual operational environment (4) is logically linked to the corresponding one of the two virtual operational environments (2, 3) via at least one virtual network connection (5, 6, 7, 8), in particular a virtual network bridge.

11. The IoT edge computer system according to any of claims 1 to 10, wherein
- system data comprises the machine data, controlled variables, measured values or parameters, or
- the operational data is related to the use of the edge computer system at its place of use and comprises sensor data, control data, plant data, personal data, in particular biometric data, or communication data from or for the one or more external systems or devices (13, 14, 15, 16).

12. The IoT edge computer system according to any one of claims 1 to 11, wherein the virtual operational environments (2, 3) are each logically assigned to the communication network via a virtual network bridge.

13. An arrangement comprising an IoT edge computer system according to any one of claims 1 to 12 and an external system or device (13, 14, 15, 16) to which the edge computer system is connected, wherein the first virtual operational environment (2) is logically linked to the external system or device (13, 14, 15, 16).

14. The arrangement according to claim 13, wherein the external system or device (13, 14, 15, 16) is a sensor, a control device or a processing server or data server, in particular a cloud server.

15. The arrangement according to claim 13 or 14, wherein the IoT edge computer system is connected to a further external system or device (13, 14, 15, 16), the second virtual operational environment (3) being logically linked to the further external system or device (13, 14, 15, 16) .

## Revendications

1. Système informatique périphérique de l'Internet des objets dans lequel un premier environnement d'exploitation virtuel (2) et un deuxième environnement d'exploitation virtuel (3) sont installés, sachant que
- le premier environnement d'exploitation virtuel (2) est installé comme environnement de fabricant pour la saisie, le traitement et/ou la consultation de données système du système informatique périphérique lui-même ou d'un ou de plusieurs systèmes ou appareils externes (13, 14, 15, 16) qui sont connectés au système informatique périphérique,
- le deuxième environnement d'exploitation virtuel (3) est installé comme environnement d'exploitant pour la saisie, le traitement et/ou la commande de données d'exploitation, de ou pour l'un ou les plusieurs systèmes ou appareils externes (13, 14, 15, 16),
- les environnements d'exploitation virtuels (2, 3) sont séparés logiquement l'un de l'autre de telle manière que l'un environnement d'exploitation virtuel (2, 3) n'ait pas accès à l'autre environnement d'exploitation virtuel (2, 3),
- les environnements d'exploitation virtuels (2, 3) sont associés logiquement respectivement à un réseau de communication respectivement via au moins une connexion réseau virtuelle (5, 6, 7, 8), et
- les connexions réseau virtuelles (5, 6, 7, 8) sont installées de telle manière qu'un établissement de connexion depuis le réseau de communication qui est associé à un des deux environnements d'exploitation virtuels (2, 3) vers le réseau de communication qui est associé à l'autre environnement d'exploitation virtuel (2, 3) soit empêché.

2. Système informatique périphérique de l'IDO selon la revendication 1, sachant qu'au moins un des environnements d'exploitation virtuels (2, 3) est raccordé à au moins une interface réseau physique (9, 10, 11, 12) au moyen de l'au moins une connexion réseau virtuelle (5, 6, 7, 8).

3. Système informatique périphérique de l'IDO selon la revendication 1 ou 2, sur lequel un système d'exploitation de base, en particulier un système Linux présentant une infrastructure KVM, est installé, sachant que la configuration des connexions réseau virtuelles (5, 6, 7, 8) est spécifiée au moyen du système d'exploitation de base.

4. Système informatique périphérique de l'IDO selon la revendication 3, sachant que la configuration des connexions réseau virtuelles (5, 6, 7, 8) est spécifiée de manière fixe au moyen du système d'exploitation de base et le système informatique périphérique est installé de telle manière qu'une modification de la configuration des connexions réseau virtuelles (5, 6, 7, 8) par les environnements d'exploitation virtuels (2, 3) respectifs ou depuis un réseau de communication respectif soit empêchée.

5. Système informatique périphérique de l'IDO selon la revendication 4, sachant que des données de configuration pour la configuration des connexions réseau virtuelles (5, 6, 7, 8) sont mémorisées dans une zone protégée, en particulier protégée en écriture, du système informatique périphérique.

6. Système informatique périphérique de l'IDO selon l'une des revendications 3 à 5, sachant que le système d'exploitation de base est installé de telle manière qu'un établissement de connexion respectivement depuis un des réseaux de communication, en particulier depuis les environnements d'exploitation virtuels (2, 3) respectifs, vers le système d'exploitation de base soit empêché.

7. Système informatique périphérique de l'IDO selon l'une des revendications 1 à 6, sachant que les environnements d'exploitation virtuels (2, 3) présentent respectivement un ou plusieurs pare-feu (17) qui sont installés pour commander un établissement de connexion de ou vers un environnement d'exploitation virtuel (2, 3) respectif depuis ou vers le réseau de communication associé logiquement.

8. Système informatique périphérique de l'IDO selon l'une des revendications 1 à 7, sachant qu'à l'intérieur des environnements d'exploitation virtuels (2, 3), respectivement une ou plusieurs applications virtuelles sont installées pour la mise à disposition de fonctionnalités prédéterminées.

9. Système informatique périphérique de l'IDO selon l'une des revendications 1 à 8, sachant qu'au moins un troisième environnement d'exploitation virtuel (4) qui est relié logiquement à un des deux environnements d'exploitation virtuels (2, 3) est installé.

10. Système informatique périphérique selon la revendication 9, sachant que le troisième environnement d'exploitation virtuel (4) est relié logiquement au correspondant des deux environnements d'exploitation (2, 3) virtuels via au moins une connexion réseau virtuelle (5, 6, 7, 8), en particulier un pont réseau virtuel.

11. Système informatique périphérique de l'IDO selon l'une des revendications 1 à 10, sachant que
- des données système comprennent les données machine, grandeurs de régulation, valeurs de mesure ou paramètres, ou
- les données d'exploitation sont en rapport avec l'utilisation du système informatique périphérique à son lieu de mise en œuvre et comprennent des données de capteur, données de commande, données d'installation, données personnelles, en particulier données biométriques, ou données de communication de ou pour l'un ou les plusieurs systèmes ou appareils externes (13, 14, 15, 16).

12. Système informatique périphérique de l'IDO selon l'une des revendications 1 à 11, sachant que les environnements d'exploitation virtuels (2, 3) sont associés logiquement respectivement au réseau de communication respectivement via un pont réseau virtuel.

13. Agencement comprenant un système informatique périphérique de l'IDO selon l'une des revendications 1 à 12 et un système ou appareil externe (13, 14, 15, 16) avec lequel le système informatique périphérique est relié, sachant que le premier environnement d'exploitation virtuel (2) est relié logiquement au système ou appareil externe (13, 14, 15, 16).

14. Agencement selon la revendication 13, sachant que le système ou appareil externe (13, 14, 15, 16) est un capteur, un appareil de commande ou un serveur de traitement ou de données, en particulier un serveur en nuage.

15. Agencement selon la revendication 13 ou 14, sachant que le système informatique périphérique de l'IDO est connecté à un système ou appareil externe (13, 14, 15, 16) supplémentaire, sachant que le deuxième environnement d'exploitation virtuel (3) est relié logiquement au système ou appareil externe (13, 14, 15, 16) supplémentaire.
